**Europäisches Patentamt**

(19) **European Patent Office**

**Office européen des brevets**

(11) Veröffentlichungsnummer: **0 076 954**

**B1**

(12) # EUROPÄISCHE PATENTSCHRIFT

(45) Veröffentlichungstag der Patentschrift:
**22.07.87**

(51) Int. Cl.⁴: **B 63 H 9/06,** B 63 B 35/82,
A 63 C 3/00, B 64 C 31/02

(21) Anmeldenummer: **82108870.5**

(22) Anmeldetag: **24.09.82**

(54) **Handsegel.**

(30) Priorität: **13.10.81 DE 3140685**

(43) Veröffentlichungstag der Anmeldung:
**20.04.83 Patentblatt 83/16**

(45) Bekanntmachung des Hinweises auf die Patenterteilung:
**22.07.87 Patentblatt 87/30**

(84) Benannte Vertragsstaaten:
**AT CH DE FR GB IT LI NL**

(56) Entgegenhaltungen:
**EP-A-0 015 875**
**WO-A-82/03053**
**FR-A-2 464 881**
**GB-A-2 050 263**
**US-A-3 455 261**
**US-A-3 924 870**
**US-A-4 269 133**

(73) Patentinhaber: **Drake, James R., 385 Mesa Road,
Santa Monica, CA 90402 (US)**
Patentinhaber: **Stanciu, Ulrich, Klingerstrasse 17,
D-8000 München (DE)**

(72) Erfinder: **Drake, James R., 385 Mesa Rd., Santa
Monica, CA- 90402 (US)**

(74) Vertreter: **Klunker, Hans- Friedrich, Dr.,
Patentanwälte Klunker . Schmitt- Nilson .
Hirsch Winzererstrasse 106, D-8000 München 40
(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Die Erfindung betrifft ein Handsegel zum Antrieb von Land- und Wasserfahrzeugen, insbesondere Segelbrettern mit kleinem Widerstand in Fahrtrichtung und vergleichsweise großem Widerstand senkrecht dazu.

Es ist bereits bekannt, zum Antrieb von Segelbrettern Handsegel zu benutzen, die vorzugsweise in sitzender Stellung mit einer Ecke auf der Oberfläche des Segelbretts abgestützt werden und nach Art eines Rahsegels vor allem bei raumem Wind dem Segelbrett einen gewissen Vortrieb verleihen.

Weiterhin sind Segelbretter mit über ein Universalgelenk fest mit dem Brett verbundendem Rigg bekannt, wobei der Benutzer das Rigg in stehender Stellung mittels eines Gabelbaums hält, der nach Art einer Spreizgaffel ausgebildet ist. Die Entwicklung derartiger Segelbretter hat in den letzten Jahren einen starken Aufschwung genommen, wobei insbesondere die Brettformen betroffen waren. Das Rigg selbst blieb im wesentlichen unverändert. Die Segelbretter, die zunächst hauptsächlich in Binnenrevieren benutzt wurden, werden nunmehr auch zunehmend an der Küste in der Brandung benutzt, wobei als neue Variante neben dem reinen Segeln bzw. Surfen auch das Springen praktiziert wird. Dabei wird durch eine plötzliche Richtungsänderung ein solcher Auftrieb im kurzzeitig dichtgeholten Segel erzeugt, daß sich das gesamte Brett aus dem Wasser abhebt und in einem mehr oder weniger großen Satz beispielsweise über einen Wellenkamm fliegt. Da das Segel als normales Dreieckssegel, wie vom klassischen Bermudarigg bekannt, geschnitten ist, liefert es in der Flugphase keinen stabilen Auftrieb, so daß auch geübte Surfer beim Aufkommen nach einem derartigen Sprung häufig stürzen. Derartige, an sich im Binnenrevier ungefährliche Stürze, können jedoch in der Brandung, bei denen diese Sprünge Praktiziert werden, höchst fatale Folgen haben, und zwar sowohl für den Surfer als auch für sein Rigg und Brett.

Immer weitere Kreise von Surfern begeistern sich jedoch für die neue Faszination des "Fliegens", wobei auch das sich ständig verbessernde allgemeine Können eine Rolle spielt.

Seit einigen Jahren sind auch sogenannte Flugdrachen bekannt, die aus einem, zwischen einem Gestänge aufgespannten Doppelflügel aus Segeltuch bestehen. Im Schwerpunkt des Flügels ist ein Gurtsystem aufgehängt, in dem der Benutzer sitzend oder liegend unter dem Flügel hängt und den Drachen durch Verlagerung seines Körpergewichts steuert. Derartige Flugdrachen haben im Prinzip gleiche Eigenschaften wie die bekannten Segelflugzeuge, d.h. sie sinken, gestartet von einem erhöhten Punkt, mit bestimmter Sinkgeschwindigkeit langsam nach unten. Selbstverständlich können diese Drachen bei entsprechender Thermik oder Aufwinden auch längere Zeit in der Luft bleiben. Eine Verwendung derartiger Flugdrachen in Verbindung mit Segelbrettern oder ähnlichen Wasser- bzw. Landfahrzeugen ist nicht möglich.

Aus der US-A-3,924,870, wie auch der FR-A-2 464 881 ist ein Handsegel zum Antrieb von Booten, Eisschlitten etc. bekannt, das aus einem zwischen zwei Spieren aufgespannten Segel besteht, welches vom Benutzer freitragend mittels eines Haltegestänges leeseitig derart zum Wind ausgerichtet wird, daß eine Vortriebskomponente auftritt, die das jeweilige Fahrzeug vorwärtstreibt.

Die bekannten Segel weisen eine komplizierte Anordnung von Steuer- und Haltespieren auf, die vom Benutzer mit jeweils einer Hand ergriffen werden sollen und mit denen das Segel in einer gewünschten Stellung zum Wind gehalten werden kann.

Da diese Haltespiere bzw. die jeweiligen Griffpositionen des Benutzers und der Angriffspunkt der Resultierenden der Windkräfte nicht in der Symmetrieebene des Handsegels liegen, treten in jeder Phase mehr oder weniger starke Drehmomente auf, die vom Benutzer durch Muskelkraft kompensiert werden müssen. Weiterhin wird als nachteilig angesehen, daß der Benutzer die Positionen des Handsegels ständig im Bezug auf drei Raumachsen überwachen bzw. optimal justieren muß. Eine zu starke Neigung zur Horizontalen führt unmittelbar zu einem Anwachsen der Auftriebs- auf Kosten der Vortriebskraft. Es ist mit dem bekannten Handsegel nicht möglich, auch für nur kurze Zeit in die Flugphase überzugehen, da der Benutzer außerhalb des Zentrums aller auftretenden Kräfte hängen würde, was zwangsläufig zu einem zeitlichen Abkippen des Pegels führt.

Aus der nachveröffentlichten internationalen Veröffentlichung WO 82/03053 ist ein selbsttragendes Handsegel zum Antrieb von Segelbrettern bekannt, das, wie oben erläutert, ebenfalls mit zwei starren Haltespieren in einer bestimmten Position zum Wind gehalten werden muß, wobei sämtliche auftretenden Kräfte und Drehmomente in allen drei Raumachsen vom Benutzer kontrolliert bzw. kompensiert werden müssen.

Angesichts dieser Nachteile der bekannten Segel liegt der Erfindung die Aufgabe zugrunde, insbesondere für eine Verwendung mit einem Segelbrett, ein freitragendes, sich selbst stabilisierendes Handsegel zu schaffen, das einfach zu bedienen ist, einen hohen Wirkungsgrad hinsichtlich der Umsetzung der Wind- in Vortriebskräfte aufweist und mit dem insbesondere ein augenblicklicher Übergang von der Gleit- in die Flugphase möglich sein soll.

Erfindungsgemäß wird diese Aufgabe dadurch gelöst, daß das Handsegel zwei gleiche Flügel aufweist, deren jeweilige Hauptebenen symmetrisch zu einer Mittelebene in einem stumpfen Winkel zueinander angeordnet sind, wobei die Flügel unter dem Einfluß von Windkräften eine nach oben offene V-Form bilden und ein Tragflügelprofil aufweisen, und daß in der Mittelebene unterhalb ein Flügel ein sich etwa über die Länge des Flügelprofils erstreckender starrer Mittelbaum zum Greifen bzw. Halten des Handsegels angeordnet ist, und wobei die Flügel und der Mittelbaum ein im wesentlichen freitragendes Gebilde darstellen.

Ein derartiges Handsegel, das aus entweder vorgeformten Profilen oder auch konventionellen Segeln bestehen kann, deren Profil sich erst unter Winddruck einstellt, hat die überraschende Wirkung, daß es sich in jedem Winkel zum wahren Wind in einer bestimmten Kipplage selbsttätig stabilisiert, wobei der Auftrieb des Handsegels durch Anstellen der Flügelflächen so reguliert werden kann, daß das Gewicht des Handsegels kompensiert wird. Der Benutzer, der das Handsegel frei trägt, hat lediglich dafür zu sorgen, daß Querkraft und Vortriebskraft auf das Fahrzeug, insbesondere das Segelbrett, übertragen wird, auf dem er steht. Die Verwendung des Handsegels ist selbstverständlich nicht auf den Vortrieb von Segelbrettern beschränkt, möglich wären auch kleine Boote, Skate boards, Rollschuhe, mit Rädern versehene Landfahrzeuge, Skier, Eisschlitten und Schlittschuhe etc.

Das Handsegel, das, mit seinen Vorderkanten symmetrisch gegen den wahren Wind gestellt, hauptsächlich vertikale Kräfte liefert, kippt bei Anstellung gegen den Wind um eine im wesentlichen horizontale Achse, in welcher sich die Greifeinrichtung, vorzugsweise ein Mittelbaum, befindet. Dabei wird die Windkraft eines Segels in eine etwa horizontale Ebene umgeklappt und durch entsprechende Zerlegung in Quer- und Vortriebskraft das Fahrzeug in einem Winkel zum Wind vorwärtsbewegt. Die Windkraft des anderen, sich nunmehr in einer etwa horizontalen Ebene befindlichen Flügels, liefert eine Auftriebskraft, die einerseits das Gewicht des Tragflügels kompensiert und andererseits den Tragflügel in einer bestimmten Kippstellung stabilisiert, so daß vom Benutzer keinerlei korrigierende Drehmomente auf das Handsegel in bezug auf seine, in Windrichtung gesehen, Längsachse aufgebracht werden müssen.

Für das Material der Flügel stehen alle Möglichkeiten zur Verfügung, die der Stand der Technik bietet, so ist ein entsprechend vorgeformter starrer Flügel ebenso denkbar wie konventionelle Segel, deren Profil sich erst unter Winddruck einstellt.

Es hat sich als vorteilhaft erwiesen, wenn der Winkel zwischen den beiden Flügelflächen zwischen etwa 180° und 120° liegt. Auch die Vorderkanten der Flügel können gegebenenfalls nach hinten angepfeilt sein, wobei der Pfeilungswinkel in der Ebene der Vorderkanten ebenfalls zwischen 180° und 120° liegt.

Gemäß einer vorteilhaften Ausführungsform der Erfindung besteht das Handsegel aus einem aus zwei Masten und einem Mittelbaum bestehenden Rahmen oder Gestänge, in das ein Segel eingespannt ist, wobei der Mittelbaum unterhalb des Segels angeordnet ist, so daß er vom Benutzer gehalten werden kann.

Weitere vorteilhafte Ausbildungen der Erfindung sind Gegenstand der Unteransprüche.

Nachfolgend ist eine Ausführungsform der Erfindung anhand der beigefügten Zeichnung beispielsweise beschrieben. Darin zeigen:

Fig. 1 eine Frontalansicht des Handsegels, wobei nur eine, symmetrisch zu einer Mittelebene ausgebildete Seite gezeigt ist,

Fig. 2 eine Draufsicht auf die in Fig. 1 gezeigte Hälfte des Handsegels,

Fig. 3 eine gegenüber der Ansicht der Fig. um 90° gedrehte Seitenansicht des Handsegels,

Fig. 4 eine Seitenansicht des vollständigen Handsegels in etwas gekippter Lage, und

Fig. 5A, 5B bis 10A, B schematische Vorder- bzw. Seitenansichten des Handsegels zur Erläuterung verschiedener Segelmanöver.

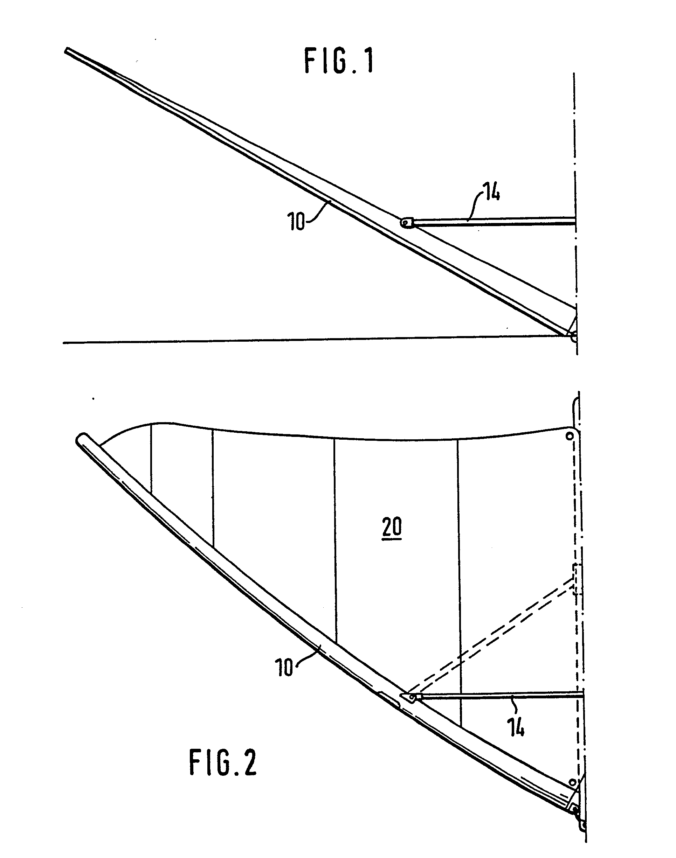

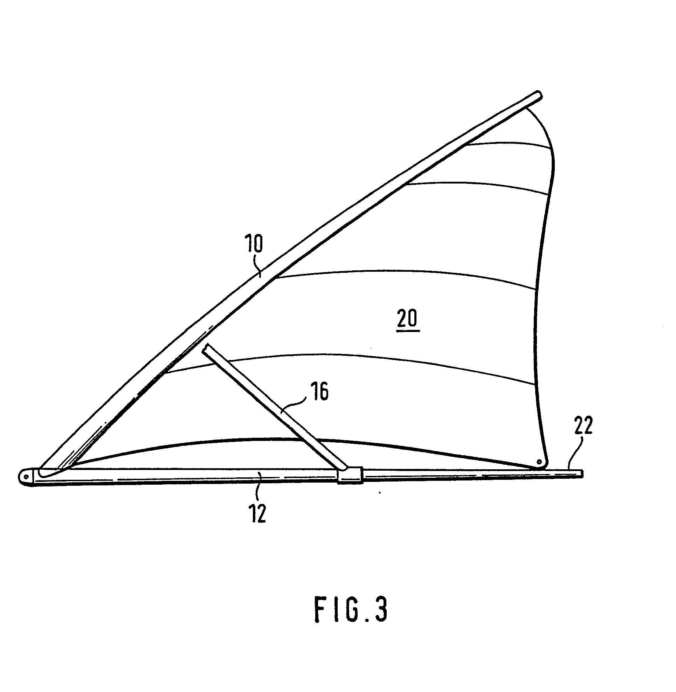

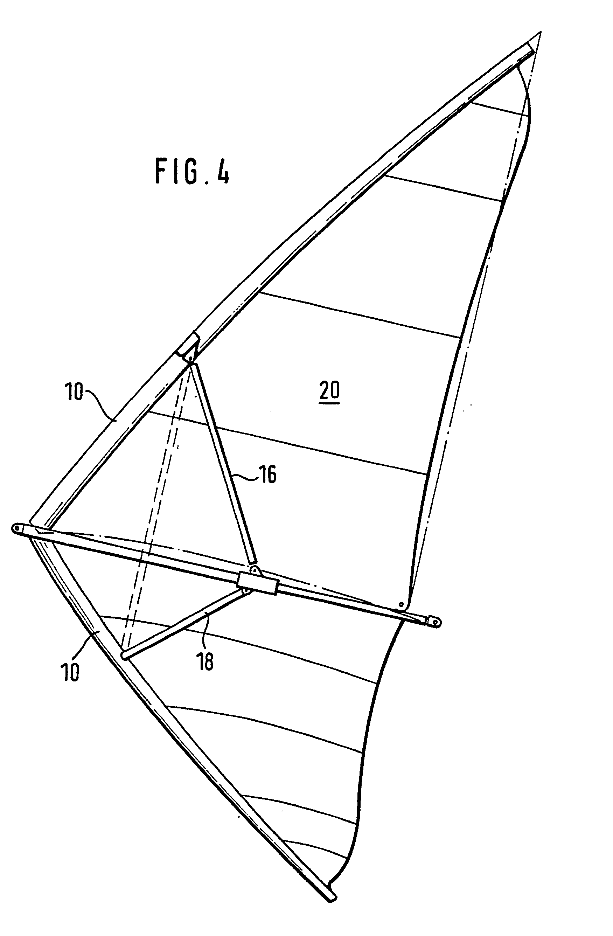

Gemäß den Fig. 1 bis 4 besteht das Handsegel aus zwei Masten 10, einem Mittelbaum 12 (Fig. 3 und 4) sowie Spreizbäumen 14, 16, 18, welche den Masten 10 und den Mittelbaum 12 in gegenseitiger Lage starr fixieren. Dabei bilden die beiden Masten 10 in einer die Masten enthaltenden Ebene einen Winkel von 120°, im konventionellen Flugzeugbau wird dieser Winkel als Pfeilungswinkel bezeichnet. Die Masten schließen bei symmetrischer Lage des Handsegels mit der Horizontalebene etwa einen Winkel von 30° ein, so daß der Winkel, den schließlich die Flügelflächen miteinander bilden, auch etwa 120° beträgt.

Die Beschläge, mit denen die Spreizbäume 14, 16, 18 am Mast 10 und Mittelbaum 12 befestigt sind, sind verschiebbar und lassen sich in verschiedenen Stellungen fixieren, so daß Pfeilungswinkel und Öffnungswinkel der Flügel in Grenzen variiert werden können.

Die beiden Masten 10 sind an ihrem Fußpunkt miteinander verbunden, der Mittelbaum 12 ist ebenfalls an der Verbindung der beiden Mastfüße befestigt. Vorzugsweise ist diese Verbindung so ausgebildet, daß eine Änderung der gegenseitigen Winkellagen bzw. ein vollständiges Zusammenlegen von Masten und Mittelbaum möglich ist. Die Befestigungsstellen der Spreizbäume befinden sich etwa zwischen einem Drittel bis zur Hälfte der Mastlänge, gemessen vom Mastfuß bis zur Mastspitze. Eine besonders einfache starre geometrische Form ergibt sich dann, wenn die Enden jeweils zweier Spreizbäume an einem gemeinsamen Beschlag angelenkt sind, so daß die Enden aller Spreizbäume in einer gemeinsamen Ebene liegen. Bei entsprechend starrer Ausbildung des Frontbeschlags oder der Beschläge für die Spreizbäume am Mittelbaum für Masten und Baum, kann gegebenenfalls auf die seitlichen Spreizbäume bzw. den mittleren Spreizbaum verzichtet werden.

Das Segel 20 ist zwischen den Masten 10 und dem Mittelbaum 12 derart aufgespannt, daß die zwei Masten jeweils in Masttaschen des Segels eingeführt sind, so daß im Vorliekbereich des Segels eine aerodynamisch wirkungsvolle Anströmkante gebildet wird. Die beiden Masttaschen werden über einen an der Verbindungsstelle der Mastfüße angeordneten Beschlag nach Bedarf gespannt.

Das Achterliek des Segels verläuft etwa in einem rechten Winkel zum Mittelbaum 12 und wird am Ende dieses Baums, der sogenannten Baumnock, befestigt. Das Segel ist insgesamt so geschnitten, daß es im gespannten Zustand eine Art Sattelfläche bildet, deren Sattel in etwa längs des Mittelbaums 12 verläuft (vgl. Fig. 3). Es wäre selbstverständlich auch möglich, zwei separate Dreieckssegel zu verwenden, die abgesehen von der Masttasche nur an der Baumnock 22 mit dem Gestänge verbunden sind. Oberhalb des Mittelbaums 12 befände sich in diesem Fall im Segel ein Längsschlitz, der aerodynamisch nicht weiter von Bedeutung ist.

Zur Einstellung des Profils bzw. zum Segeltrimm kann bei einem einstückigen Segel auch zwischen der vorderen Verbindung der Mastfüße und der Baumnock 22 eine Leine gespannt sein, mit welcher das Segel näher an den Mittelbaum 12 herangeholt werden kann, wobei sich das Segelprofil abflacht, ein Lockern dieser Leine würde umgekehrt zu einer stärkeren Profilwölbung führen.

Vorzugsweise weisen die Masttaschen Fenster auf, um eine Verschiebung der Beschläge, an denen die Spreizbäume 14, 16, 18 befestigt sind, in Grenzen zu ermöglichen.

Im Segel kann eine Reihe von aerodynamisch vorgeformten Segellatten oder Flügelspanten eingesetzt sein, um ein ideales Tragflügelprofil von vornherein vorzuformen und das Profil entsprechend zu versteifen.

Für den Fall, daß das Handsegel zum Vortrieb eines Segelbretts benutzt werden soll, wird das Handsegel am Mittelbaum 12 gefaßt und frei geführt, wobei durch Kippen des Baums 12 in der Vertikalebene und Drehen des Baums 12 in der Horizontalebene bzw. Anstellen des Handsegels gegen den Wind eine horizontal gerichtete Windkraft erzeugt wird, die vom Benutzer als Vortrieb auf ein geeignetes Fahrzeug übertragen wird, wobei der Benutzer sein Körpergewicht zur Balance der Kräfte einsetzt.

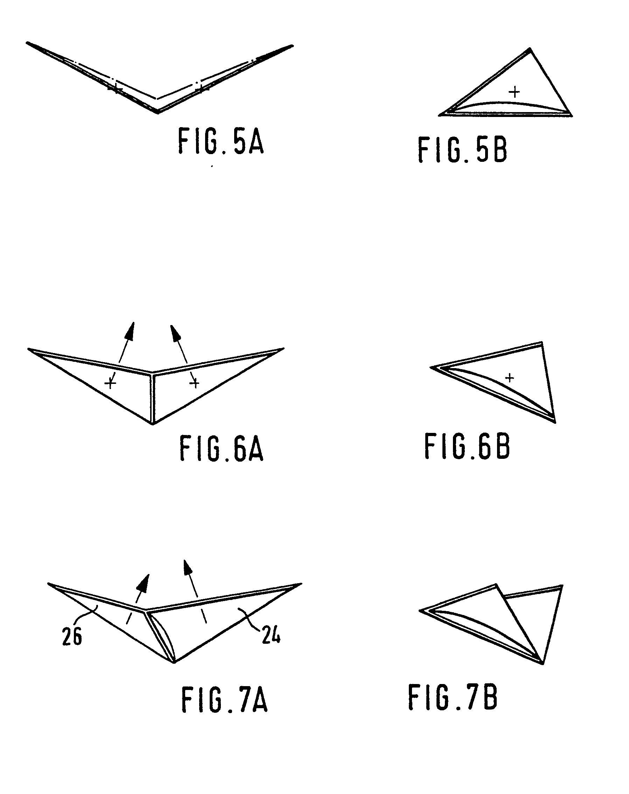

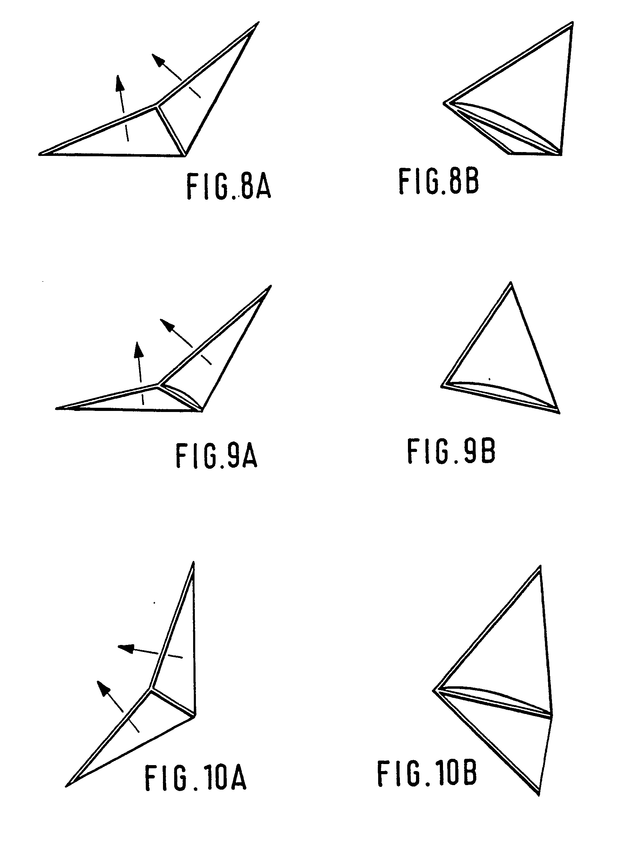

Nachfolgend sollen einige Segelmanöver anhand der Fig. 5A, 5B bis 10A, 10B beschrieben werden.

Die Fig. 5A bis 10A zeigen jeweils eine Ansicht des Handsegels aus der Richtung des anströmenden Winds, während die Fig. 5B bis 10B eine Ansicht des Handsegels in gleicher Position aus einer Richtung senkrecht zum anströmenden Wind darstellen. Die Funktion wird im Zusammenhang mit der Verwendung des Handsegels zum Vortrieb eines Segelbretts erklärt. Es ist selbstverständlich, daß an Stelle des Segelbretts auch jedes andere Land- oder Wasserfahrzeug treten kann, vorausgesetzt, sein Widerstand in Fahrtrichtung ist klein gegenüber seinem Widerstand quer dazu.

Zunächst wird das Handsegel mittels einer an seiner Nase, d.h. dem Verbindungspunkt der beiden Mastfüße mit dem vorderen Ende des Mittelbaums, befestigten Startschot aus dem Wasser gehoben, wodurch ab einer bestimmten Windstärke, etwa 2 Beaufort, so viel Auftrieb nach oben erzeugt wird, daß sich das Handsegel selbst trägt, es steht dabei waagrecht ruhig im Wind, da beide Flügelhälften gleich groß sind. Sollte der Wind nicht ausreichen, um in dem durch Latten vorprofilierten Segel genügend Auftrieb zu erzeugen, kann der Flügel auch auf einen Stützmast mit einem Gelenk am Brett und einem Gelenk am Mittelbaum gestellt werden, so daß das Handsegel dann teilweise durch eigenen Auftrieb und teilweise vom Stützmast getragen wird. Diese Position ist in den Fig. 5A bzw. 5B gezeigt.

Um nun mit Hilfe des Handsegels Kräfte, sei es Vortrieb nach vorn oder Auftrieb nach oben, zu erzeugen, muß man das Handsegel relativ zum wahren Wind anstellen. Der Wirkungsgrad der Profilumströmung wird besser, die Wind- bzw. Auftriebskraft steigt, beide Kräfte sind jedoch nach wie vor gegeneinander ausbalanciert, so daß zunächst außer einem vergrößerten Auftrieb noch nichts geschieht. Diese Stellung ist in den Fig. 6A bzw. 6B gezeigt.

In der nächsten Phase dreht man das ganze Handsegel seitlich zum Wind, was einen unterschiedlichen Anströmwinkel der jeweiligen Flügelhälfte nach sich zieht, der luvseitige Flügel (Bezugsziffer 24 in Fig. 7A) bekommt eine günstigere Anströmung, sein Wirkungsgrad wird momentan erhöht. Das bedeutet, daß seine relative Windkraft vergrößert wird, daß er mehr Auftrieb erzeugt als der leeseitige Flügel (Bezugsziffer 26 in Fig. 7A). Das aus dem Ungleichgewicht der Windkräfte entstehende Drehmoment dreht das gesamte Handsegel um die Achse des Mittelbaums 12. Je mehr nun der luvseitige Flügel 24 von der horizontalen in eine vertikale Lage umgedreht wird, desto mehr wird die Windkraft nach vorne und desto weniger wird sie nach oben wirken. Gleichzeitig erhöhen sich aber die Auftriebskräfte des wegen der Rotation nun nach unten geneigten leeseitigen Flügels 26, so daß schließlich wieder ein Kräftegleichgewicht erreicht wird, in welchem das Handsegel in sich ausbalanciert ist und in einer zwischen horizontaler und vertikaler Richtung gekippten Stellung stehen bleibt. Diese Kipplage hängt davon ab, wie weit man den Mittelbaum aus der Windrichtung herausdreht (diese neue ausbalancierte Lage des Handsegels ist in Fig. 8A bzw. 8B dargestellt). Die Horizontalkomponente der resultierenden Windkraft des luvseitigen Flügels 24, die in Fahrtrichtung des Segelbretts zeigt, treibt dieses nun vorwärts. Da in der gezeigten Lage des Handsegels noch eine erhebliche resultierende Vertikalkraft auftritt, die notwendigerweise nicht als Vortrieb nutzbar ist, eignet sich die gezeigte Segelstellung besonders gut für Halbwindoder Raumschotkurse, da hier das Segelbrett weitgehend entlastet wird und früher ins Gleiten kommt. Der Benutzer sollte dabei Fußschlaufen benutzen, um die Vertikalkräfte auch zur Entlastung des Bretts nutzen zu können.

Zum Kreuzen wird man das Handsegel noch etwa weiter gegen den Wind anstellen und dabei aber die Neigung des Mittelbaums 12 gegenüber der in Fig. 9A gezeigten Stellung leicht verringern. Der luvseitige Flügel 24 wird noch stärker angeströmt, was zu einer nochmals erhöhten Windkraft führt, während die Windkraft auf den leeseitigen Flügel 26 gleichermaßen nachläßt. Das resultierende Drehmoment dreht das Handsegel weiter um die Achse des Baums 12 in die in Fig. 10A gezeigte Stellung, in der die Vertikalkräfte wieder ausbalanciert sind. Diese Position, in der die Hauptkomponenten der Windkräfte der beiden Flügel 24 und 26 weitgehend horizontal gerichtet sind, eignet sich besonders zum Kreuzen, wobei die größten Vortriebskräfte erforderlich sind.

Je nach Drehstellung des Riggs läßt sich also das Verhältnis von Auftrieb und Vortrieb verändern. Zum Springen über Wellen wird man daher sogar nur noch die Auftriebskräfte benutzen, um einen kurzen Segelflug zu ermöglichen. Nötig ist dazu nur, daß im Moment des Abhebens das Handsegel in die in Fig. 6A gezeigte Stellung gedreht wird, so daß eine stabile Gleitfluglage erreicht wird. Die genaue Stellung des Handsegels bzw. Mittelbaums 12 zur Windrichtung einerseits in einer Horizontalebene und andererseits in einer Vertikalebene zur Waagrechten müssen jeweils vom Benutzer abhängig von seinem gewünschten Kurs, Wind und Wellen gewählt werden. In jeder Stellung jedoch wird sich das Handsegel, was seine Drehung um die Achse des Baums 12 angeht, selbst ausbalancieren, so daß vom Benutzer keinerlei Drehmomente auf den Mittelbaum 12 aufgebracht werden müssen.

Für den Fall der Verwendung des Handsegels zum Vortrieb eines Segelbretts funktioniert die Steuerung dabei genau so wie bei einem herkömmlichen Rigg durch Verlagern des Segeldruckpunktes relativ zum Lateraldruckpunkt. Dabei ist es vorteilhaft, daß im Gegensatz zum herkömmlichen Rigg das Handsegel nicht am Segelbrett festgemacht ist, sondern daß der Benutzer zur Steuerung auf dem Brett beliebig herumlaufen kann. Bei stärkerem Wind empfiehlt sich auch die Benutzung eines bekannten Trapezgurtes, dessen Halteleine entweder am Baum 12 oder an den unteren Spreizbäumen 16, 18 befestigt werden kann.

Zum Wenden geht der Benutzer mit dem Handsegel nach hinten, was zu einem Anluven bis in den Wind führt, die Nase des Handsegels bzw. sein Vorderende wird sodann durch den Wind gezogen, die Hände wechseln ihre Position (vorn nach hinten, hinten nach vorn) und das Handsegel wird jetzt in anderer Richtung zum Wind gedreht, wobei der Benutzer auf dem Brett nach vorn geht, um wieder abzufallen. Analog funktioniert die Halse. Grundsätzlich haben alle Manöver den Vorteil, daß der Surfer nicht um einen fest montierten Mastfuß herumgehen muß, sondern Wende und Halse überall am Segelbrett durchführen kann, wobei er lediglich von der Trimmung des Bretts abhängig ist.

Der Mittelbaum kann gegebenenfalls auch durch einen schon bekannten Gabelbaum ersetzt werden. In diesem Fall können die Spreizbäume 16, 18 durch einen einzigen am Spreizbaum 14 befestigten zusätzlichen Spreizbaum ersetzt werden, der den oberen Teil des Gabelbaums hält bzw. abstützt.

**Patentansprüche**

1. Handsegel zum Antrieb von Land- und Wasserfahrzeugen, insbesondere Segelbrettern, mit kleinem Widerstand in Fahrtrichtung und vergleichsweise großem Widerstand senkrecht dazu,

gekennzeichnet durch zwei gleiche Flügel (24, 26), deren jeweilige Hauptebenen symmetrisch zu einer Mittelebene in einem stumpfen Winkel zueinander angeordnet sind, wobei die Flügel unter dem Einfluß von Windkräften eine nach oben offene V-Form bilden und ein Tragflügelprofil aufweisen, und daß in der Mittelebene unterhalb der Flügel ein sich etwa über die Länge des Flügelprofils erstreckender starrer Mittelbaum (12) zum Greifen bzw. Halten des Handsegels angeordnet ist, und wobei die Flügel und der Mittelbaum ein im wesentlichen freitragendes Gebilde darstellen.

2. Handsegel nach Anspruch 1, dadurch gekennzeichnet, daß sich das Tragflügelprofil erst unter Windbeaufschlagung einstellt.

3. Handsegel nach Anspruch 1, dadurch gekennzeichnet, daß das Tragflügelprofil vorgeformt ist.

4. Handsegel nach einem der Ansprüche 1 bis 3, dadurch gekennzeichnet, daß der Winkel zwischen den beiden Flügelebenen zwischen 180° und 120° liegt.

5. Handsegel nach einem der Ansprüche 1 bis 4, dadurch gekennzeichnet, daß die Vorderkanten der Flügel in Anströmrichtung des Handsegels gesehen nach hinten gepfeilt sind.

6. Handsegel nach Anspruch 5, dadurch gekennzeichnet, daß die Pfeilung der Vorderkanten in der die Vorderkanten enthaltenden Ebene zwischen 180° und 120° liegt.

7. Handsegel nach einem der Ansprüche 1 bis 6, dadurch gekennzeichnet, daß die zwei Flügel als Segel ausgebildet sind, die zwischen zwei die Vorderkanten der Flügel bildenden Masten (10) und einem Mittelbaum (12) aufgespannt sind, der mit seinem Vorderende an der Verbindung der beiden Mastfüße befestigt ist und der die Einrichtung zum Greifen bzw. Halten des Handsegels darstellt.

8. Handsegel nach Anspruch 7, dadurch gekennzeichnet, daß die zwei am Fußpunkt gelenkig verbundenen Masten (10) mittels eines Spreizbaums (14) in bestimmter Lage zueinander gehalten werden und jeder Mast (10) über einen weiteren Spreizbaum (16, 18) am Mittelbaum (12) abgestützt ist.

9. Handsegel nach Anspruch 8, dadurch gekennzeichnet, daß die Angriffspunkte der Spreizbäume an den Masten (10) und dem Mittelbaum (12) in Längsrichtung in verschiedener Position fixierbar sind.

10. Handsegel nach Anspruch 9, dadurch gekennzeichnet, daß die Spreizbäume von den Masten (10) zum Ende des Mittelbaums (12) geführt sind.

11. Handsegel nach einem der Ansprüche 7 bis 10, dadurch gekennzeichnet, daß die Länge des Mittelbaums (12) so bemessen ist, daß die Achterlieks der Segel am Ende des Baums (12) befestigt sind.

12. Handsegel nach einem der Ansprüche 7 bis 11, dadurch gekennzeichnet, daß das Segel einstückig ist und durch eine zwischen Vorderende und Nock des Baums (12) gespannte Spannleine trimmbar ist.

13. Handsegel nach einem der Ansprüche 7 bis 12, dadurch gekennzeichnet, daß jeder Flügel (24, 26) ein separates Segel aufweist, das unabhängig vom jeweils anderen trimmbar ist.

14. Handsegel nach einem der Ansprüche 7 bis 13, dadurch gekennzeichnet, daß die Segel aerodynamisch vorgeformte Segellatten oder Spanten aufweisen.

15. Handsegel nach einem der Ansprüche 7 bis 14, dadurch gekennzeichnet, daß es mit einer an der Verbindung der beiden Mastfüße oder am Mittelbaum befestigten Leine mit einem Segelbrett verbunden ist.

16. Handsegel nach einem oder mehreren der Ansprüche 7 - 14, gekennzeichnet durch einen Stützmast, der über Gelenke einerseits am Mittelbaum und andrerseits an einem Segelbrett befestigt ist.

**Claims**

1. A hand-sail for propelling land vehicles and watercraft, in particular sailboards, with little drag in the direction of motion and relatively great drag perpendicularly thereto, characterized by two identical wings (24, 26), the main planes of which are disposed at an obtuse angle to each other symmetrically to a median plane, the wings forming a V shape open at the top under the influence of wind forces and having an airfoil profile, and in that a rigid middle boom (12) extending substantially over the length of the airfoil profile for grasping or holding the hand-sail is disposed on the median plane beneath the wings, whereby the wings and the middle boom constitute a substantially self-supporting structure.

2. A hand-sail according to claim 1, characterized in that the airfoil profile only comes about when subjected to wind.

3. A hand-sail according to claim 1, characterized in that the airfoil profile is preformed.

4. A hand-sail according to any of claims 1 to 3, characterized in that the angle between the two wing planes is between 180° and 120°.

5. A hand-sail according to any of claims 1 to 4, characterized in that the leading edges of the wings are swept back in the direction of the wind blowing against the hand-sail.

6. A hand-sail according to claim 5, characterized in that the sweep-back angle of the leading edges on the plane containing the leading edges is between 180° and 120°.

7. A hand-sail according to any of claims 1 to 6, characterized in that the two wings are designed as sails which are stretched between two masts (10) forming the leading edges of the wings, and a middle boom (12) attached at its fore end to the connection of the two mast bases and constituting the means for grasping or holding the hand-sail.

8. A hand-sail according to claim 7, characterized in that the two masts (10) pivoted on the base are held in a certain position relative to each other by means of a spreader (14) and each mast (10) is supported on the middle boom (12) by a further spreader (16, 18).

9. A hand-sail according to claim 8, characterized in that the points of attachment of the spreaders are capable of being fixed in the longitudinal direction in different positions on the masts (10) and the middle boom (12).

10. A hand-sail according to claim 9, characterized in that the spreaders are directed from the masts (10) to the end of the middle boom (12).

11. A hand-sail according to any of claims 7 to 10, characterized in that the length of the middle boom (12) is such that the after leeches of the sails are attached to the end of the boom (12).

12. A hand-sail according to any of claims 7 to 11, characterized in that the sail is of one piece and capable of being trimmed by a stretching line stretched between the fore end and the yardarm of the boom (12).

13. A hand-sail according to any of claims 7 to 12, characterized in that each wing (24, 26) has a separate sail capable of being trimmed independently of the other.

14. A hand-sail according to any of claims 7 to 13, characterized in that the sails have aerodynamically preformed sail battens or ribs.

15. A hand-sail according to any of claims 7 to 14, characterized in that it is connected with a sailboard by a line attached to the connection of the two mast bases or to the middle boom.

16. A hand-sail according to any of claims 7 to 14, characterized by a support mast attached by joints to the middle boom, on the one hand, and to a sailboard, on the other hand.

## Revendications

1. Voile tenue par la main destinée à la propulsion de véhicules terrestres et maritimes, en particulier de planches à voile, présentant une faible résistance dans le sens de la marche et une résistance comparativement élevée perpendiculairement à cette direction, caractérisée par deux ailes égales (24, 26) dont les plans principaux sont chacun disposés symétriquement par rapport à un plan médian en un angle obtus, les ailes formant sous l'influence des forces du vent une forme en V ouverte vers le haut et présentant un profil d'aile portante et en ce qu'il est placé, sur le plan médian au dessous de l'aile, un mât central (12) rigide, se prolongeant environ sur la longueur du profil de l'aile et destiné à saisir et à maintenir la voile tenue par la main, les ailes et le mât central représentant une oeuvre pour l'essentiel à portée libre.

2. Voile tenue par la main selon la revendication 1, caractérisée en ce que le profil d'aile portante ne s'ajuste que sous l'action du vent.

3. Voile tenue par la main selon la revendication 1, caractérisée en ce que le profil d'aile portante est préformé.

4. Voile tenue par la main selon l'une des revendications 1 à 3, caractérisée en ce que l'angle entre les deux plans d'aile est compris entre 180 et 120°.

5. Voile tenue par la main selon l'une des revendications 1 à 4, caractérisée en ce que, vu dans la direction de soufflage de la voile tenue par la main, les bords d'attaque des ailes sont en flèche vers l'arrière.

6. Voile tenue par la main selon la revendication 5, caractérisée en ce que la flèche des bords d'attaque se trouve dans le plan contenant les bords d'attaque à un angle compris entre 180 et 120°.

7. Voile tenue par la main selon l'une des revendications 1 à 6, caractérisée en ce que les deux ailes sont réalisées sous la forme de voiles qui sont tendues entre deux mâts (10) formant les bords d'attaque des ailes et un mât central (12) qui est fixé par son extrémité avant à la liaison des deux pieds de mât et représente le dispositif destiné à saisir et à maintenir la voile tenue par la main.

8. Voile tenue par la main selon la revendication 7, caractérisée en ce que les deux mâts (10) articulés au pied sont maintenus dans une position déterminée à l'aide d'un espar d'écartement (14) et en ce que chaque mât (10) est soutenu sur le mât central (12) par un autre espar d'écartement (16, 18).

9. Voile tenue par la main selon la revendication 8, caractérisée en ce que les points d'attaque des espars d'écartement sur les mâts (10) et le mât central (12) peuvent être fixés longitudinalement à des endroits différents.

10. Voile tenue par la main selon la revendication 9, caractérisée en ce que les espars d'écartement sont acheminés des mâts (10) à l'extrémité du mât central (12).

11. Voile tenue par la main selon l'une des revendications 7 à 10, caractérisée en ce que la longueur du mât central (12) est calculée de telle sorte que les bords de fuite des voiles sont fixés à l'extrémité du mât (12).

12. Voile tenue par la main selon l'une des revendications 7 à 11, caractérisée en ce que la voile est d'un seul morceau et peut être orientée par une corde de tension tendue entre l'extrémité avant et la pointe du mât (12).

13. Voile tenue par la main selon l'une des revendications 7 à 12, caractérisée en ce que chaque aile (24, 26) présente une voile séparée qui peut être orientée indépendamment de l'autre.

14. Voile tenue par la main selon l'une des revendications 7 à 13, caractérisée en ce que les voiles présentent des lattes de voile ou des membrures préformées de manière aérodynamique.

15. Voile tenue par la main selon l'une des revendications 7 à 14, caractérisée en ce qu'elle est reliée à une planche à voile par une corde fixée sur la liaison des deux pieds de mât ou sur le mât central.

16. Voile tenue par la main selon l'une ou plusieurs des revendications 7 à 14, caractérisée par un support de mât qui est fixé sur le mât central d'un côté et de l'autre côté sur une planche à voile.

FIG.1

14

10

FIG.2

10

20

14

FIG.3

## FIG.4

10

20

16

10

18

FIG.5A

FIG.5B

FIG.6A

FIG.6B

FIG.7A

FIG.7B

FIG.8A

FIG.8B

FIG.9A

FIG.9B

FIG.10A

FIG.10B